Europäisches Patentamt

European Patent Office

Office européen des brevets

(11) Veröffentlichungsnummer: **0 068 132**
A2

# (12) EUROPÄISCHE PATENTANMELDUNG

(21) Anmeldenummer: 82104263.7

(22) Anmeldetag: 15.05.82

(51) Int. Cl.³: **C 08 L 77/00**, C 08 L 51/00, C 08 L 55/02, C 08 L 25/12

---

(30) Priorität: 25.05.81 DE 3120803

(43) Veröffentlichungstag der Anmeldung: 05.01.83
Patentblatt 83/1

(84) Benannte Vertragsstaaten: BE CH DE FR GB IT LI NL

(71) Anmelder: BASF Aktiengesellschaft,
Carl-Bosch-Strasse 38, D-6700 Ludwigshafen (DE)

(72) Erfinder: Brandstetter, Franz, Dr., Ritterbuechel 45,
D-6730 Neustadt (DE)
Erfinder: Hambrecht, Juergen, Dr., Werderstrasse 30,
D-6900 Heidelberg (DE)
Erfinder: Reimann, Horst, Dr., Adelheidstrasse 26,
D-6520 Worms (DE)
Erfinder: Pflueger, Richard, Am Weidenschlag 20,
D-6700 Ludwigshafen (DE)
Erfinder: Ruppmich, Karl, Koenigsbacher Strasse 134,
D-6700 Ludwigshafen (DE)

(54) Schlagzähe thermoplastische Formmassen.

(57) Neue Schlagzähne thermoplastische Formmassen aus einem Polyamid (20–95 Teile), einem Pfropfmischpolymerisat (5–80 Teile), das gebildet wird aus einem Kautschukpolymerisat, auf welches Styrol und Acrylnitril aufgepfropft ist, einem Styrol- und/oder α-Methylstyrol-Acrylnitril-Copolymerisat (0–60 Teile) und einem Olefincopolymerisat (0,5–5 Teile), das Carboxyl- oder Carboxylanhydridgruppen enthält, sowie gegebenenfalls üblichen Zusatzstoffen.

EP 0 068 132 A2

<u>Schlagzähe thermoplastische Formmassen</u>

Die Erfindung betrifft neuartige schlagzähe thermoplastische Formmassen, die durch Mischen von Polyamiden, Pfropfmischpolymerisaten des Styrols und Acrylnitrils auf einem kautschukartigen Polymerisat, gegebenenfalls unter Zusatz von Styrol- und/oder $\alpha$-Methylstyrol-Acrylnitril-Copolymeren, und einem Olefincopolymerisat mit hohem Anteil an Carboxyl- bzw. Carboxylanhydridgruppen erhalten werden.

Aus der DE-PS 12 41 606 sind Formmassen aus Polyamiden und Olefincopolymerisaten mit 0,1 bis 10 Molprozent sauren Gruppen bekannt. Die Schlagzähigkeit dieser Formmassen ist zwar höher als die der Basispolyamide, jedoch für viele Anwendungen unbefriedigend.

Aus der DE-AS 26 22 973 sind Formmassen mit hoher Schlagzähigkeit bekannt, die aus einem Polyamid und einem mit Haftstellen gegenüber dem Polyamid versehenen Polymeren bestehen, wobei das Verhältnis der Zugmoduls der beiden Komponenten größer als 10:1 ist. Hinweise für die Herstellung von hochschlagzähen Formmassen unter Verwendung von Pfropfmischpolymerisaten, die keine Haftstellen aufweisen und einen hohen Zugmodul besitzen, sind nicht zu entnehmen.

Der vorliegenden Erfindung liegt die Aufgabe zugrunde, ausgehend von Polyamiden und mit diesen unverträglichen, leicht zugänglichen Pfropfmischpolymerisaten, wie sie für die Herstellung von ABS- oder ASA-Polymeren in großtechnischem Maßstab verwendet werden, Formmassen zu entwickeln, die eine hohe Schlagzähigkeit besitzen. Diese Aufgabe wird gelöst durch die Mitverwendung von geringen Mengen an Olefincopolymeren, die einen hohen Anteil an sauren Gruppen aufweisen.

Wbg/P

Gegenstand der Erfindung sind somit schlagzähe thermoplastische Formmassen, enthaltend

(A) 20 - 95 Gewichtsteile eines Polyamids,

(B) 5 - 80 Gewichtsteile eines Pfropfmischpolymerisats, das gebildet wird aus

(B$_1$) 40 - 80 Gew.%, bezogen auf (B), eines Kautschukpolymerisats, dessen Glastemperatur unter 0°C liegt, worauf

(B$_2$) 20 - 60 Gew.%, bezogen auf (B), einer Mischung von Styrol und Acrylnitril im Gewichtsverhältnis 90:10 bis 65:35 aufgepfropft ist,

(C) 0 - 60 Gewichtsteile mindestens eines Copolymerisats von Styrol und/oder $\alpha$-Methylstyrol mit Acrylnitril, wobei dieses Copolymerisat 20-40 Gew.% Acrylnitril einpolymerisiert enthält,

(D) 0,5 - 5 Gewichtsteile eines Olefinpolymerisats mit 2 bis 50 Gew.% Carboxyl- und/oder Carboxylanhydrid-Gruppen, sowie

(E) gegebenenfalls übliche Zusatzstoffe in wirksamen Mengen,

wobei die Summe der Gewichtsteile A, B, C und D gleich 100 ist.

Das Polyamid (= Komponente A der erfindungsgemäßen Formmassen) ist an sich bekannt und umfaßt die halbkristallinen und amorphen Harze mit Molekulargewichten von mindestens 5000, die gewöhnlich als Nylon bezeichnet werden. Solche

0068132

Polyamide sind in den US-PS 20 71 250, 20 71 251, 21 30 523, 21 30 948, 22 41 322, 23 12 966, 25 12 606 und 33 93 210 beschrieben. Das Polyamid kann durch Kondensation äquimolekularer Mengen einer gesättigten Dicarbonsäure mit 4 bis 12 Kohlenstoffatomen mit einem Diamin, welches 4 bis 14 Kohlenstoffatome aufweist, gegebenenfalls in Gegenwart von Spuren einer Monocarbonsäure, wie Stearinsäure oder Propionsäure als Molekulargewichtsregler, hergestellt werden. Um einen Überschuß an endständigen Amingruppen über die endständigen Carboxylgruppen in dem Polyamid zu erzielen, kann man das Diamin im Überschuß anwenden. Beispiele für Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodekandisäureamid (Nylon 612), die durch Ringöffnung von Lactamen erhaltenen Polyamide, wie Polycaprolactam, Polylaurinsäurelactam, ferner Poly-11-aminoundekansäureamid und Bis--(p-aminocyclohexyl)-methandodekandisäureamid. Auch Polyamide auf Basis von Terephthalsäure oder Isophthalsäure als Säurekomponente, oder von Trimethylhexamethylendiamin oder Bis-(p-aminocyclohexyl)-propan als Diaminkomponente können verwendet werden. Geeignet sind auch Polyamidgrundharze, die durch Copolymerisation zweier der vorgenannten Polymeren oder durch Terpolymerisation der vorgenannten Polymeren oder ihrer Komponenten hergestellt worden sind, z.B. das Copolymere aus Adipinsäure, Isophthalsäure und Hexamethylendiamin. Vorzugsweise sind die Polyamide linear und haben Schmelzpunkte von mehr als 200°C.

Die Formmassen enthalten 20 - 95, insbesondere 50 - 95, vorzugsweise 75 - 95 Gewichtsteile des Polyamids.

Die Komponente B der erfindungsgemäßen Formmassen ist ebenfalls an sich bekannt. Es handelt sich um Pfropfmischpoly-

0068132

merisate, die durch Aufpfropfen von Styrol und Acrylnitril (20 - 60 Gew.%, bezogen auf B, Gewichtsverhältnis 80:20 bis 65:35) auf ein Kautschukpolymerisat ($B_1$), dessen Glastemperatur unter $0^{\circ}C$, vorzugsweise unter $-40^{\circ}C$, liegt, entstehen.

Das Kautschukpolymerisat $B_1$ ist an sich bekannt.

Geeignete kautschukartige Polymerisate sind beispielsweise Polybutadien, Butadien-Acrylester-Copolymere auf der Basis von Acrylsäurebutyl- und/oder -ethylhexylester, Polyacrylsäurealkylester, insbesondere solche mit 1 bis 8 Kohlenstoffatomen im Alkylrest, Copolymere aus Butadien, Acrylsäurealkylestern und Vinylalkylethern, Copolymere aus Ethylen, Propylen und einer Dienkomponente. Das kautschukartige Polymerisat hat in der Regel eine Glasübergangstemperatur unter $0^{\circ}C$, vorzugsweise unter $-40^{\circ}C$ (gemessen nach der DSC-Methode, K.M. Illers, Makromol. Chemie 127 (1969), 51).

Zur Herstellung des Pfropfmischpolymerisats geht man vorzugsweise von etwa 40 bis 80 Gew.%, vorzugsweise 55 bis 75 Gew.% des kautschukartigen Polymerisats und 20 bis 60 Gew.%, vorzugsweise 25 bis 45 Gew.% einer Mischung von Styrol und Acrylnitril im Gewichtsverhältnis 90:10 bis 65/35, vorzugsweise 75:25 bis 70:30 aus.

Die Herstellung der kautschukmodifizierten Copolymerisate (Pfropfmischpolymerisate) ist bekannt, z.B. aus DE-AS 24 27 960, DE-AS 18 11 882, DE-AS 12 60 135, DE-AS 12 38 207, DE-AS 12 47 021, US-OS 3 515 774.

Als weitere Komponente (C) enthalten die erfindungsgemäßen Formmassen 0 - 60 Gew.%, vorzugsweise 5 - 30 Gew.% eines an sich bekannten Copolymerisats von Styrol und/oder $\alpha$-Methylstyrol mit Acrylnitril, wobei dieses Copolymeri- sat (Hartkomponente) 20 - 40 Gew.%, vorzugsweise 25 - 35 Gew.% Acrylnitril einpolymerisiert enthält. Es handelt sich dabei um Copolymerisate, die praktisch ausschließlich aus Styrol und/oder α-Methylstyrol und Acrylnitril bestehen. Bevorzugte Hartkomponenten sind Styrol-Acrylnitril- -Copolymere mit 20 bis 40, insbesondere 25 bis 35 Gew.% Acrylnitril, α-Methylstyrol-Acrylnitril-Copolymere mit 20 bis 35 Gew.% Acrylnitril und α-Methylstyrol-Styrol- -Acrylnitril-Terpolymerisate mit 20 bis 40 Gew.% Acrylnitril. Selbstverständlich können auch Mischungen verschiedener Hartkomponenten verwendet werden. Die Herstellung dieser Hartkomponenten durch Copolymerisation der Monomeren in Masse, Lösung, Suspension oder wäßriger Emulsionen ist bekannt und beispielsweise in den Patentschriften US 3 747 899, US 2 714 101, US 2 727 884, US 3 442 880, US 3 288 731, US 3 198 775, DE-OS 454 894 und DE-OS 25 59 069 beschrieben.

Vorzugsweise werden Hartkomponenten mit einer Viskositätszahl von 40 bis 150, insbesondere 50 bis 100, vorzugsweise 50 bis 85 verwendet (bestimmt nach DIN 53 726; Lösung von 0,5 g Polymerisat in 100 ml Dimethylformamid).

Die Komponente (C) kann aber auch zusammen mit der Komponente (B) in Lösung, Masse und Dispersion hergestellt werden. Dies gilt vor allem, wenn als Kautschukkomponente Terpolymere auf Basis von Ethylen, Propylen und einem Dien verwendet werden, wie es beispielsweise in der US-Patentschrift 3 515 774 und in der DE-AS 12 47 021 beschrieben wird.

Es ist wesentlich, daß die erfindungsgemäßen Formmassen ferner als Komponente (D) 0,5 - 5, vorzugsweise 1 bis 2 Gewichtsteile eines Olefincopolymerisats mit 2 bis 50 Gew.%, vorzugsweise 5 bis 35 Gew.% Carboxyl- und/

oder Carboxylanhydridgruppen enthalten. Derartige Copolymerisate eines Olefins, insbesondere eines 1-Olefins, wie Ethylen, Propylen, Buten-(1), Isobuten, Vinylcyclohexan oder vorzugsweise Styrol, $\alpha$-Methylstyrol oder eines anderen Olefins mit 2 - 10 C-Atomen, werden durch Copolymerisation mit einer entsprechenden Menge eines Carboxyl- oder Carboxylanhydridgruppen enthaltenden Monomeren hergestellt wie Acrylsäure, Methacrylsäure, Maleinsäure, Fumarsäure oder Maleinsäureanhydrid. Selbstverständlich können auch Gemische der genannten Monomeren verwendet werden.

Besonders geeignet sind Terpolymerisate aus Styrol, Acrylsäure und Maleinsäureanhydrid, wobei der Styrolanteil im Bereich von 55 - 65, der Acrylsäureanteil im Bereich von 5 - 20 und der Maleinsäureanhydridanteil im Bereich von 15 - 40 Gew.% liegt.

Die Molekulargewichte der Komponente (D) liegen im allgemeinen zwischen 500 und 20 000 (osmometrisch gemessen in Aceton 0,1 bis 0,5 Gew.%). Vorzugsweise liegen die Molekulargewichte im Bereich von 500 bis 7 000, insbesondere zwischen 800 und 2 000. Ihre Herstellung ist bekannt. Sie wird vorzugsweise durch radikalische Polymerisation der Monomeren in Lösung oder Masse vorgenommen.

Die erfindungsgemäßen Mischungen können als weitere Komponente (E) alle Zusatz- und/oder Hilfsstoffe enthalten, wie sie für ABS-Polymerisate und Polyamide üblich und gebräuchlich sind. Als solche Zusatz- und/oder Hilfsstoffe seien beispielsweise genannt: Füllstoffe, weitere verträgliche Kunststoffe, Farbstoffe oder Pigmente, Antistatika, Antioxidantien, Flammschutzmittel und Schmiermittel. Die Zusatz- und Hilfsstoffe werden in üblichen und wirksamen Mengen, vorzugsweise in Mengen von 0,1 bis zu insgesamt

0068132

etwa 30 Gew.%, bezogen auf die Mischung (A + B + C), eingesetzt.

Die Herstellung der erfindungsgemäßen Formmassen erfolgt durch Mischen der Komponenten (A), (B), (C), (D) und (E) nach bekannten Methoden.

Vorzugsweise geschieht jedoch das Mischen der Komponenten durch gemeinsames Extrudieren, Kneten oder Verwalzen, wobei die Komponenten in der Regel zuvor aus der bei der Polymerisation erhaltenen Lösung oder wäßrigen Dispersion isoliert worden sind. Die in wäßriger Dispersion erhaltenen Produkte der Pfropfmischpolymerisation (Komponenten (B) können auch nur teilweise entwässert werden und als feuchte Krümel mit den übrigen Komponenten vermischt werden, wobei dann während des Vermischens die vollständige Trocknung der Pfropfmischpolymerisate erfolgt.

Die Ermittlung der Pfropfausbeute und somit des Anteils des Pfropfmischpolymerisats (B) in dem bei der Pfropfmischpolymerisation erhaltenen Produkt erfolgte durch Extraktion dieses Polymerisationsproduktes mit Methylethylketon bei 25$^{\circ}$C. Der Pfropfgrad der Pfropfmischpolymerisate, d.h. der prozentuale Anteil vom im Pfropfmischpolymerisat enthaltenen gepfropften Styrol und Acrylnitril, ergibt sich am einfachsten aus der Elementaranalyse. Die Viskosität der Hartkomponenten wurde in Dimethylformamid gemessen.

Die Ermittlung der Glasübergangstemperatur der Kautschuke kann z.B. nach der DSC-Methode (K.M. Illers, Makromol. Chemie 127 (1969) S. 1) erfolgen.

Es zeigte sich überraschenderweise, daß die erfindungsgemäßen Formmassen eine sehr hohe Zähigkeit und Schlagzähigkeit besitzen. Dieser Effekt ist nicht vorhersehbar, da die Komponenten (B) und (C) keine Säuregruppen oder andere Haftstellen tragen, die bekanntlich Voraussetzung für eine gute Verträglichkeit mit dem Polyamid sind.

Die Erfindung wird durch die nachfolgenden Beispiele näher erläutert. Die in den Beispielen genannten Teile und Prozente beziehen sich, sofern nicht anders angegeben, auf das Gewicht.

## Beispiele und Vergleichsbeispiele

Die in der Tabelle angegebenen Mengen an Komponente (A), (B), (C) und (D) werden auf einem Mischextruder bei 230 − 280°C aufgeschmolzen, gemischt und anschließend granuliert.

Als Polyamidkomponente (A) wurden handelsübliches Polyamid 6 und Polyamid 6.6 mit K-Werten (DIN 53726) von 73, gemessen an 1%igen Lösungen der Polyamide in 96%iger Schwefelsäure, eingesetzt.

Als Komponente (B) wurden folgende Pfropfmischpolymerisate verwendet:

I   Pfropfcopolymerisat, bei dem auf 60 Gew.-Teile eines Polybutadienkautschuks mit einer mittleren Teilchengröße von 0,3 /um 40 Gew.-Teile einer Mischung aus Styrol/Acrylnitril im Verhältnis 70:30 aufgepfropft sind.

II  Pfropfmischpolymerisat, bei dem auf 75 Gew.-Teilen eines Copolymerisates-Latex aus 40 Gew.-Teilen Butadien, 56 Gew.-Teilen Butylacrylat und 4 Gew.-Teilen Methylvinylether mit einer mittleren Teilchengröße 0,08 /um 25 Gew.-Teile einer Mischung aus Styrol/Acrylnitril im Verhältnis 70:30 aufgepfropft sind.

III Pfropfmischpolymerisat, bei dem auf 60 Gew.-Teilen eines Copolymerisat-Latex aus 96 Gew.-Teilen Butylacrylat und 4 Gew.-Teilen Tricyclodecenylacrylat mit einer mittleren Teilchengröße von 0,08 $\mu$m 40 Gew.--Teile einer Mischung aus Styrol/Acrylnitril im Verhältnis 70:30 aufgepfropft sind.

IV Pfropfmischpolymerisat, wie III, nur mit einer mittleren Teilchengröße von 0,35 $\mu$m.

Die Pfropfmischpolymerisate enthalten auf Grund des Herstellverfahrens noch geringe Anteile an Hartkomponente (C): Pfropfmischpolymerisat I 5 Gew.%, II 9 Gew.%, III 12 Gew.% und IV 15 Gew.% mit einem Acrylnitrilgehalt von ca. 30 Gew.%.

Als gesonderte Komponente CI wurde ein Styrol-Acrylnitril--Copolymerisat mit 27 Gew.% Acrylnitril und einem mittleren Molekulargewicht von $M_W$ = 150 000, das gemäß DE-AS 10 01 001 hergestellt wurde, eingesetzt.

Die Komponenten (D) werden folgendermaßen hergestellt:

Eine Mischung der Monomeren, vorzugsweise Styrol, Acrylsäure und/oder Maleinsäureanhydrid wird kontinuierlich einer Polymerisationseinrichtung zugeführt, die aus einem Druckkessel mit einem nachgeschalteten, mit statischen Mischelementen versehenen, Druckrohr besteht. Die Polymerisation wird bei einer Temperatur von ca. 260°C durchgeführt. Am Reaktorausgang wird das Copolymerisat abgezogen. Die durchschnittliche Verweilzeit der Monomeren in der Polymerisationszone beträgt 15 Minuten. Der Druck in der Polymerisationszone wird bei 25 bar gehalten. Der Feststoffgehalt der entstehenden Polymerschmelze beträgt bis zu 99 %. Die restlichen Monomeren werden bei einem Druck von 5 - 20 Torr und Temperaturen zwischen 150°C und 200°C in einer Entgasungsvorrichtung entfernt.

Komponente D I

Eine Mischung aus 60 Teilen Styrol, 10 Teilen Acrylsäure und 30 Teilen Maleinsäureanhydrid wird wie oben beschrieben polymerisiert. Das Polymerisat enthält 5 Gew.% Carboxylgruppen und 23 Gew.% Carboxylanhydrid-Gruppen und hat ein Molekulargewicht von 1700 (dampfdruckosmometrisch 0,1%ig in Aceton, gemessen bei 37°C im Mechrolab-Osmometer).

Komponente D II

Eine Mischung aus 90 Teilen Styrol und 10 Teilen Maleinsäureanhydrid werden wie oben beschrieben bei 230°C polymerisiert. Das Polymerisat hat ein Molekulargewicht von 3100 (dampfdruckosmometrisch in Aceton, 0,1%ig) und enthält 8 Gew.% Carboxylanhydrid-Gruppen.

Komponente D III

Eine Mischung aus 72 Teilen Styrol und 28 Teilen Acrylsäure werden wie oben beschrieben bei 280°C polymerisiert. Das Polymerisat hat 13 Gew.% Carboxylgruppen und ein Molekulargewicht von 1500 (dampfdruckosmometrisch in Aceton, Konzentration 0,1%ig).

Die im Vergleichsbeispiel A eingesetzte Komponente Z ist ein Copolymerisat aus Ethylen/Propylen/Hexadien-(1,4)--pfropf-Maleinsäureanhydrid, das dem in DE-AS 26 22 973 als Polymeres No. 32 (Beispiel 83) beschriebenen entspricht.

Tabelle

| Beispiele (erfindungsgemäß) | Komponente A (Gew.Tle) | | Komponente B Art (Gew.Tle) | | Komponente D Art (Gew.Tle) | | Lochkerbschlagzähigkeit bei 23°C (kJ/m²) nach DIN 53 753 |
|---|---|---|---|---|---|---|---|
| | Polyamid 6 | Polyamid 6,6 | | | | | |
| 1  | | 79,5 | I   | 20 | I | 0,5 | 64 |
| 2  | | 94   | I   | 5  | I | 1   | 92 |
| 3  | | 78   | I   | 20 | I | 2   | 71 |
| 4  | | 89   | I   | 10 | I | 1   | >100 |
| 5  | | 79   | I   | 20 | I | 1   | 95 |
| 6  | 79,5 | | I   | 20 | I | 0,5 | 53 |
| 7  | 94   | | I   | 5  | I | 1   | 89 |
| 8  | 78   | | I   | 20 | I | 2   | 68 |
| 9  | 89   | | I   | 10 | I | 1   | 93 |
| 10 | 79   | | I   | 20 | I | 1   | 78 |
| 11 | 90   | | I   | 5  | I | 5   | 50 |
| 12 | 85   | | I   | 10 | I | 5   | 53 |
| 13 | | 79,5 | II  | 20 | I | 0,5 | 63 |
| 14 | | 78   | II  | 20 | I | 2   | 73 |
| 15 | 79,5 | | II  | 20 | I | 0,5 | 86 |
| 16 | 78   | | II  | 20 | I | 2   | 84 |
| 17 | | 79,5 | III | 20 | I | 0,5 | 34 |
| 18 | | 78   | III | 20 | I | 2   | 64 |
| 19 | 79,5 | | III | 20 | I | 0,5 | 34 |

Tabelle

| | | | | | | |
|---|---|---|---|---|---|---|
| 20 | 78 | III | 20 | I | 2 | 68 |
| 21 | 79,5 | IV | 20 | I | 0,5 | 61 |
| 22 | 78 | IV | 20 | I | 2 | 77 |
| 23 | 79,5 | IV | 20 | I | 0,5 | 65 |
| 24 | 78 | IV | 20 | I | 2 | 84 |
| 25 | 79 | I | 20 | II | 1 | 96 |
| 26 | 79 | I | 20 | III | 1 | 87 |
| 27+ | 79 | I | 20 | I | 1 | 83 |

+ Die gesondert hergestellte Komponente C I, ein Styrol-Acrylnitril-Copolymerisat mit 27 Gew.% Acrylnitril, wurde zu 10 Gew.% beigemischt.

Tabelle

| Vergleichs-versuche | Komponente A (Gew.Tle) | | Komponente B | | Lochkerbschlagzähigkeit[1] |
| --- | --- | --- | --- | --- | --- |
| | Polyamid 6 | Polyamid 6,6 | Art | (Gew.Tle) | bei 23°C (kJ/m²) |
| A | | 80 | | 20 | 100 |
| B | | 95 | I | 5 | 48 |
| C | | 90 | I | 10 | 32 |
| D | | 80 | I | 20 | 31 |
| E | 95 | | I | 5 | 34 |
| F | 90 | | I | 10 | 42 |
| G | 80 | | I | 20 | 41 |
| H | | 80 | II | 20 | 32 |
| I | 80 | | II | 20 | 62 |
| J | | 80 | III | 20 | 23 |
| K | 80 | | III | 20 | 28 |
| L | | 80 | IV | 20 | 34 |
| M | 80 | | IV | 20 | 61 |

[1] nach DIN 53 753

0068132

## Patentanspruch

Schlagzähe thermoplastische Formmassen, enthaltend

(A)   20 - 95 Gewichtsteile eines Polyamids,

(B)   5 - 80 Gewichtsteile eines Pfropfmischpolymerisats, das gebildet wird aus

   ($B_1$)  40 - 80 Gew.%, bezogen auf (B), eines Kautschukpolymerisats, dessen Glastemperatur unter $0^{\circ}$C liegt, worauf

   ($B_2$)  20 - 60 Gew.%, bezogen auf (B), einer Mischung von Styrol und Acrylnitril im Gewichtsverhältnis 90:10 bis 65:35 aufgepfropft ist,

(C)   0 - 60 Gewichtsteile mindestens eines Copolymerisats von Styrol und/oder $\alpha$-Methylstyrol mit Acrylnitril, wobei dieses Copolymerisat 20 - 40 Gew.% Acrylnitril einpolymerisiert enthält,

(D)   0,5 - 5 Gewichtsteile eines Olefincopolymerisats mit 2 bis 50 Gew.% Carboxyl- und/oder Carboxylanhydrid-Gruppen, sowie

(E)   gegebenenfalls übliche Zusatzstoffe in wirksamen Mengen,

wobei die Summe der Gewichtsteile A, B, C und D gleich 100 ist.